(19) Europäisches Patentamt
European Patent Office
Office européen des brevets

(11) **EP 4 491 669 A1**

(12) **EUROPEAN PATENT APPLICATION**
published in accordance with Art. 153(4) EPC

(43) Date of publication:
**15.01.2025 Bulletin 2025/03**

(21) Application number: **22931036.2**

(22) Date of filing: **09.12.2022**

(51) International Patent Classification (IPC):
*C08L 67/02* [(2006.01)]    *B65D 65/02* [(2006.01)]
*C08G 69/26* [(2006.01)]    *C08L 77/06* [(2006.01)]

(52) Cooperative Patent Classification (CPC):
**B65D 65/02; C08G 69/26; C08L 67/02; C08L 77/06**

(86) International application number:
**PCT/JP2022/045484**

(87) International publication number:
**WO 2023/171066 (14.09.2023 Gazette 2023/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.03.2022 JP 2022036772**

(71) Applicant: **MITSUBISHI GAS CHEMICAL COMPANY, INC.**
**Chiyoda-ku**
**Tokyo 100-8324 (JP)**

(72) Inventors:
• **KOBAYASHI, Masayuki**
**Hiratsuka-shi, Kanagawa 254-0016 (JP)**
• **MIYABE, Takanori**
**Hiratsuka-shi, Kanagawa 254-0016 (JP)**

(74) Representative: **Vossius & Partner**
**Patentanwälte Rechtsanwälte mbB**
**Siebertstrasse 3**
**81675 München (DE)**

(54) **RESIN COMPOSITION, MOLDED BODY AND MULTILAYER BODY**

(57) A resin composition contains from 50 to 99 parts by mass of a polyethylene terephthalate resin and from 50 to 1 part by mass of a polyamide resin, wherein the polyamide resin is a copolymer containing a diamine-derived structural unit and a dicarboxylic acid-derived structural unit, 70 mol% or higher of the diamine-derived structural unit is derived from xylylenediamine, from 65.0 to 95.0 mol% of the dicarboxylic acid-derived structural unit is derived from an $\alpha,\omega$-linear aliphatic dicarboxylic acid having from 4 to 8 carbons, from 35.0 to 5.0 mol% of the dicarboxylic acid-derived structural unit is derived from an $\alpha,\omega$-linear aliphatic dicarboxylic acid having from 9 to 12 carbons, and the polyamide resin has a relative viscosity of from 1.7 to 2.5.

**EP 4 491 669 A1**

## Description

Technical Field

The present invention relates to a resin composition, a molded body, and a multilayer body.

Background Art

Polyester resins represented by polyethylene terephthalate (PET) have excellent appearance characteristics such as transparency and glossiness, and also have excellent mechanical performance, aroma retention, a gas barrier property, and recyclability. Therefore, polyester resins are widely used in various packaging materials such as films, sheets, and hollow containers. Although polyester resins have a high gas barrier property, they are not necessarily sufficient for applications requiring a further gas barrier property against oxygen and the like. Examples of means for improving the gas barrier property of polyester resins include vapor-depositing aluminum oxide or silicon oxide on a molded body or a packaging container made of polyester resin, or applying, laminating, or melt-mixing a resin having a gas barrier property higher than that of polyester resin on a molded body or a packaging container made of polyester resin.

An example of the resin having a gas barrier property higher than that of polyester resin is an ethylene-vinyl alcohol copolymer resin. While an advantage of polyester resins is transparency, a downside of ethylene-vinyl alcohol copolymer resins is their negative effect on transparency. Due to the characteristics of the molecular structure, ethylene-vinyl alcohol copolymer resins have poor compatibility with polyester resins, and resin compositions made by mixing ethylene-vinyl alcohol copolymer resins and polyester resins are cloudy. Furthermore, at the optimum processing temperature for polyester resins, ethylene-vinyl alcohol copolymer resins tend to undergo rapid thermal degradation, impairing the processing stability of polyester resins.

Meanwhile, examples of gas barrier resins other than ethylene-vinyl alcohol copolymers include polyamide resins represented by nylon 6 and nylon 66. In particular, a preferred example is polymetaxylylene adipamide, a polyamide resin that has an excellent gas barrier property and that is obtained by polymerizing a diamine component containing meta-xylylenediamine as a main component and a dicarboxylic acid component containing adipic acid as a main component. Polymetaxylylene adipamide has a high gas barrier property compared to other polyamide resins, and has glass transition temperature, melting point, and crystallinity similar to those of polyethylene terephthalate, which is a polyester resin used widely in particular. Therefore, polymetaxylylene adipamide has molding conditions similar to those of polyester resins, and can be easily molded with polyester resins. From this, it can be said that polymetaxylylene adipamide is very suitable as a material for improving the gas barrier property of polyester resins. Such resin compositions obtained by blending a polyester resin and a polyamide resin are described in Patent Document 1 and Patent Document 2.

Citation List

Patent Documents

Patent Document 1: WO 2020/250794
Patent Document 2: WO 2017/094542

Summary of Invention

Technical Problem

According to studies conducted by the inventors of the present invention, a resin composition containing a polyester resin and polymetaxylylene adipamide has an excellent gas barrier property, but higher transparency may be required in some applications.

The present invention aims to solve this problem, and an object of the present invention is to provide a resin composition, a molded body, and a multilayer body having excellent transparency while maintaining an excellent barrier property.

Solution to Problem

As a result of studies conducted in response to the problem described above, the present inventors found that the above problem can be solved by adjusting the composition and relative viscosity of polyamide resin.

Specifically, the problems described above are solved by the following means.

<1> A resin composition containing from 50 to 99 parts by mass of a polyethylene terephthalate resin and from 50 to 1 part by mass of a polyamide resin, wherein the polyamide resin is a copolymer containing a diamine-derived structural unit and a dicarboxylic acid-derived structural unit, 70 mol% or higher of the diamine-derived structural unit is derived from xylylenediamine, from 65.0 to 95.0 mol% of the dicarboxylic acid-derived structural unit is derived from an $\alpha,\omega$-linear aliphatic dicarboxylic acid having from 4 to 8 carbons, from 35.0 to 5.0 mol% of the dicarboxylic acid-derived structural unit is derived from an $\alpha,\omega$-linear aliphatic dicarboxylic acid having from 9 to 12 carbons, and the polyamide resin has a relative viscosity of from 1.7 to 2.5.

<2> The resin composition according to <1>, wherein from 71.0 to 95.0 mol% of the dicarboxylic acid-derived structural unit is derived from an $\alpha,\omega$-linear aliphatic dicarboxylic acid having from 4 to 8 carbons, and from 29.0 to 5.0 mol% of the dicarboxylic acid-derived structural unit is derived from an $\alpha,\omega$-linear aliphatic dicarboxylic acid having from 9 to 12 carbons.

<3> The resin composition according to <1>, wherein from 75.0 to 95.0 mol% of the dicarboxylic acid-derived structural unit is derived from an $\alpha,\omega$-linear aliphatic dicarboxylic acid having from 4 to 8 carbons, and from 25.0 to 5.0 mol% of the dicarboxylic acid-derived structural unit is derived from an $\alpha,\omega$-linear aliphatic dicarboxylic acid having from 9 to 12 carbons.

<4> The resin composition according to any one of <1> to <3>, wherein the $\alpha,\omega$-linear aliphatic dicarboxylic acid having from 4 to 8 carbons contains adipic acid, and the $\alpha,\omega$-linear aliphatic dicarboxylic acid having from 9 to 12 carbons contains sebacic acid.

<5> The resin composition according to any one of <1> to <4>, wherein 70 mol% or higher of the diamine-derived structural unit is derived from meta-xylylenediamine.

<6> The resin composition according to any one of <1> to <5>, wherein the polyamide resin has a relative viscosity of from 1.9 to 2.2.

<7> A molded body formed from the resin composition described in any one of <1> to <6>.

<8> The molded body according to <7>, wherein the molded body is an extrusion-molded body.

<9> The molded body according to <7> or <8>, wherein the molded body is a film.

<10> The molded body according to <9>, wherein the molded body is uniaxially stretched or biaxially stretched.

<11> The molded body according to <7>, wherein the molded body is an injection-molded body.

<12> The molded body according to <7> or <11>, wherein the molded body is a hollow molded body.

<13> A multilayer body including the molded body described in any one of <7> to <12>.

Advantageous Effects of Invention

According to the present invention, a resin composition, a molded body, and a multilayer body having excellent transparency while maintaining an excellent barrier property can be provided.

Description of Embodiments

An embodiment for carrying out the present invention (hereinafter referred to simply as "the present embodiment") will be described next in detail. The present embodiment described below is an example for describing the present invention, and the present invention is not limited only to the present embodiment.

In the present specification, numerical values described before and after the term "to" are respectively the lower limit and the upper limit of a range including the numerical values.

In the present specification, various physical property values and characteristic values are those at 23°C, unless otherwise noted.

In the present specification, the melting point (Tm) is a value measured by differential scanning calorimetry (DSC) in accordance with ISO11357. Specifically, the melting point (Tm) can be measured according to the description in paragraph [0036] of WO 2016/084475, the contents of which are incorporated herein by reference.

The multilayer body in the present specification is intended to include those having the shape of a film or a sheet. "Film" and "sheet" each refer to a generally flat molded body whose thickness is small relative to its length and width. Further, the "film" and "sheet" in the present specification may have a single layer or multiple layers.

When a measurement method described in a standard set forth in the present specification differs depending on the year, it is based on the standard as of January 1, 2022 unless otherwise stated.

A resin composition of the present embodiment contains from 50 to 99 parts by mass of a polyethylene terephthalate resin and from 50 to 1 part by mass of a polyamide resin, wherein the polyamide resin is a copolymer containing a diamine-derived structural unit and a dicarboxylic acid-derived structural unit, 70 mol% or higher of the diamine-derived structural unit is derived from xylylenediamine, from 65.0 to 95.0 mol% of the dicarboxylic acid-derived structural unit is derived from an α,ω-linear aliphatic dicarboxylic acid having from 4 to 8 carbons, from 35.0 to 5.0 mol% of the dicarboxylic acid-derived structural unit is derived from an α,ω-linear aliphatic dicarboxylic acid having from 9 to 12 carbons, and the polyamide resin has a relative viscosity of from 1.7 to 2.5.

Such a configuration can yield a resin composition having excellent transparency while maintaining an excellent barrier property. By using an α,ω-linear aliphatic dicarboxylic acid having from 4 to 8 carbons and an α,ω-linear aliphatic dicarboxylic acid having from 9 to 12 carbons together as dicarboxylic acid components constituting the polyamide resin, the crystallization rate becomes slow, cloudiness is less likely to occur during solidification, and the resulting molded body tends to have improved transparency. In particular, while blends of polyester resin and polyamide resin tend to have poor transparency, it is highly significant in the present embodiment that transparency is able to be reduced with the use of a specific xylylenediamine-based polyamide resin. In particular, it is remarkable that the haze is significantly reduced while the transparency is improved as compared with that of polyester resins and MXD6 (a polyamide resin synthesized from meta-xylylenediamine and adipic acid).

In addition, by using the specific xylylenediamine-based polyamide resin, an oxygen barrier property is also improved. Also, by setting the relative viscosity to a range of from 1.7 to 2.5, transparency tends to further improve. The reason for this is presumed to be the improved dispersibility of the xylylenediamine-based polyamide resin.

Polyethylene Terephthalate Resin

The resin composition of the present embodiment contains a polyethylene terephthalate resin. By containing the polyethylene terephthalate resin, an excellent mechanical property, chemical resistance, and aroma retention are achieved.

The polyester resin used in the present embodiment preferably contains a diol-derived structural unit and a dicarboxylic acid-derived structural unit. 70 mol% or higher of the diol-derived structural unit is preferably derived from ethylene glycol. 60 mol% or higher of the dicarboxylic acid-derived structural unit is preferably derived from at least one selected from terephthalic acid and an ester thereof (preferably terephthalic acid).

In the diol-derived structural unit, preferably 85 mol% or higher, more preferably 90 mol% or higher, even more preferably 95 mol% or higher, and yet even more preferably 99 mol% or higher is derived from ethylene glycol.

In addition, in the dicarboxylic acid-derived structural unit, preferably 70 mol% or higher, more preferably 80 mol% or higher, and even more preferably 90 mol% or higher is derived from at least one selected from terephthalic acid and an ester thereof. The upper limit of the foregoing may be 100 mol%, and is preferably 99 mol% or less.

Furthermore, in the present embodiment, from 60 to 99 mol% of the dicarboxylic acid-derived structural unit may be derived from at least one selected from terephthalic acid and an ester thereof (preferably terephthalic acid), and from 40 to 1 mol% of the dicarboxylic acid-derived structural unit may be derived from at least one selected from isophthalic acid and an ester thereof (preferably isophthalic acid).

Furthermore, in the present embodiment, the proportion of structural unit derived from at least one selected from isophthalic acid and an ester thereof in the dicarboxylic acid-derived structural unit is preferably 20 mol% or less, more preferably 15 mol% or less, even more preferably 10 mol% or less, and yet even more preferably 5 mol% or less.

In the polyester resin used in the present embodiment, the diol-derived structural unit may further contain another structural unit such as a structural unit derived from 1,4-cyclohexanedimethanol. However, in the present embodiment, preferably 85 mol% or higher, more preferably 90 mol% or higher, even more preferably 95 mol% or higher, and yet even more preferably 99 mol% or higher of the diol-derived structural unit is derived from ethylene glycol.

Moreover, in the polyester resin used in the present embodiment, the dicarboxylic acid-derived structural unit may further contain another structural unit such as a structural unit derived from a naphthalene dicarboxylic acid. However, in the present embodiment, preferably 85 mol% or higher, more preferably 90 mol% or higher, even more preferably 95 mol% or higher, and yet even more preferably 99 mol% or higher of the dicarboxylic acid-derived structural unit is terephthalic acid, isophthalic acid, and an ester thereof (preferably terephthalic acid and isophthalic acid).

In the polyester resin in the present embodiment, preferably 70 mass% or more, more preferably 80 mass% or more, even more preferably 90 mass% or more, yet even more preferably 95 mass% or more, still more preferably 98 mass% or more, and yet still more preferably 99 mass% or more of all structural units excluding the end groups are composed of a diol-derived structural unit and a dicarboxylic acid-derived structural unit.

The polyester resin contained in the polyester resin layer may be a crystalline polyester resin having a clear melting point, or may be an amorphous polyester resin having no clear melting point, but is preferably a crystalline polyester resin having a melting point.

The polyester resin in the polyester resin in the present embodiment preferably has a melting point of 150°C or higher, more preferably 200°C or higher, even more preferably 220°C or higher, and yet even more preferably 300°C or higher, and is preferably 290°C or lower, more preferably 280°C or lower.

When the polyester resin layer in the present embodiment includes two or more types of polyester resins, the melting point of the polyester resin is a value obtained by multiplying the melting point of each polyester resin by the mass fraction.

The intrinsic viscosity of the polyester resin is preferably 0.30 dL/g or more, more preferably 0.40 dL/g or more, and even more preferably 0.60 dL/g or more. Further, the intrinsic viscosity is preferably 2.00 dL/g or less, more preferably 1.50 dL/g or less, even more preferably 1.00 dL/g or less, and yet even more preferably 0.90 dL/g or less.

When the polyester resin layer in the present embodiment contains two or more types of polyester resins, the intrinsic viscosity is the intrinsic viscosity of the mixture of polyester resins.

The intrinsic viscosity is measured according to the following method.

A polyester resin (pellets) is dissolved in a mixed solution of phenol/ 1, 1,2,2-tetrachloroethane (mass ratio 1/1) by stirring at 110°C for 1 hour to give a concentration of 1.00 g/dL. The resulting sample solution is then cooled to 30°C. The number of seconds for the sample solution to fall down and the number of seconds for only the solvent to fall down are measured separately at 30°C using a fully automatic solution viscometer, and the intrinsic viscosity is calculated in accordance with Equation (1) below.

$$\text{Intrinsic Viscosity} = ((1 + 4K_H\eta_{sp})^{0.5}-1)/(2K_HC) \; ... \; (1)$$

where $\eta_{sp} = \eta/\eta_0 - 1$, $\eta$ being the number of seconds for the sample solution to fall down, $\eta_0$ being the number of seconds for only the solvent to fall down, C is the concentration of the sample solution (g/dL), and $K_H$ is Huggins' constant. $K_H$ is 0.33.

For the polyester resin, the polyester resins described in paragraphs [0064] to [0080] of JP 2016-169027 A, paragraphs [0010] to [0021] of JP 2006-111718 A, JP 2017-105873 A, and WO 2013/168804 can be referenced, and the contents of the disclosures are incorporated herein.

The mass ratio of the polyethylene terephthalate resin in the resin composition of the present embodiment is preferably 50 mass% or more, more preferably more than 50 mass%, even more preferably 60 mass% or more, further preferably 65 mass% or more, still preferably 75 mass% or more, and still further preferably 85 mass% or more. When the mass ratio is equal to or higher than the lower limit, high transparency can be maintained. Further, the mass ratio of the polyethylene terephthalate resin in the resin composition is preferably 99 mass% or less, more preferably 98 mass% or less, even more preferably 97 mass% or less, and further preferably 96 mass% or less. When the mass ratio is equal to or lower than the upper limit, a high gas barrier property can be achieved.

The resin composition of the present embodiment may contain only one type of polyethylene terephthalate resin, or may contain two or more types of polyethylene terephthalate resins. When two or more types are contained, the total amount thereof preferably falls within the above range.

<Polyamide Resin>

The resin composition of the present embodiment contains a polyamide resin. The polyamide resin used in the present embodiment contains a diamine-derived structural unit and a dicarboxylic acid-derived structural unit, 70 mol% or higher of the diamine-derived structural unit being derived from xylylenediamine, from 65.0 to 95.0 mol% of the dicarboxylic acid-derived structural unit being derived from an α,ω-linear aliphatic dicarboxylic acid having from 4 to 8 carbons, from 35.0 to 5.0 mol% of the dicarboxylic acid-derived structural unit being derived from an α,ω-linear aliphatic dicarboxylic acid having from 9 to 12 carbons. The polyamide resin has a relative viscosity of from 1.7 to 2.5. Hereinafter, in the present specification, such a polyamide resin may be referred to as a "xylylenediamine-based polyamide resin". By using the xylylenediamine-based polyamide resin, a resin composition having excellent transparency and a barrier property can be obtained.

The xylylenediamine-based polyamide resin contains a diamine-derived structural unit and a dicarboxylic acid-derived structural unit, 70 mol% or higher of the diamine-derived structural unit being derived from xylylenediamine, from 65.0 to 95.0 mol% of the dicarboxylic acid-derived structural unit being derived from an α,ω-linear aliphatic dicarboxylic acid having from 4 to 8 carbons, from 35.0 to 5.0 mol% of the dicarboxylic acid-derived structural unit being derived from an α,ω-linear aliphatic dicarboxylic acid having from 9 to 12 carbons.

The xylylenediamine-based polyamide resin in the present embodiment is a copolymer in which the dicarboxylic acid-derived structural unit contains both a structural unit derived from an α,ω-linear aliphatic dicarboxylic acid having from 4 to 8 carbons and a structural unit derived from an α,ω-linear aliphatic dicarboxylic acid having from 9 to 12 carbons. That is, the xylylenediamine-based polyamide resin in the present embodiment is a copolymer of at least xylylenediamine, an α,ω-linear aliphatic dicarboxylic acid having from 4 to 8 carbons, and an α,ω-linear aliphatic dicarboxylic acid having from 9 to 12 carbons. By using a copolymer as described above, transparency is improved. That is, when a blend of a polyamide resin (e.g. MXD6) in which 70 mol% or higher of the diamine-derived structural unit is derived from xylylenediamine and the dicarboxylic acid-derived structural unit is derived from an α,ω-linear aliphatic dicarboxylic acid having from 4 to 8 carbons and a polyamide resin (e.g. MXD10) in which 70 mol% or higher of the diamine-derived structural unit is derived from xylylenediamine and the dicarboxylic acid-derived structural unit is derived from an α,ω-linear aliphatic dicarboxylic acid having from 9 to 12 carbons is used, a sufficient effect of delamination resistance cannot be achieved. This is presumably because MXD6 or the like and MXD10 or the like are not sufficiently compatible with each other. In the present embodiment, this problem is solved by using a copolymer (MXD610 and the like).

The xylylenediamine-based polyamide resin used in the present embodiment is a copolymer of a xylylenediamine (preferably meta-xylylenediamine), an $\alpha,\omega$-linear aliphatic dicarboxylic acid having from 4 to 8 carbons (preferably adipic acid), and an $\alpha,\omega$-linear aliphatic dicarboxylic acid having from 9 to 12 carbons (preferably sebacic acid). In the xylylenediamine-based polyamide resin used in the present embodiment, preferably 70 mass% or more, more preferably 80 mass% or more, even more preferably 90 mass% or more, yet even more preferably 95 mass% or more, still more preferably 98 mass% or more, and yet still more preferably 99 mass% or more of all structural units excluding the end groups are composed of structural units derived from a xylylenediamine, an $\alpha,\omega$-linear aliphatic dicarboxylic acid having from 4 to 8 carbons, and an $\alpha,\omega$-linear aliphatic dicarboxylic acid having from 9 to 12 carbons.

In the xylylenediamine-based polyamide resin, 70 mol% or more, preferably 80 mol% or more, more preferably 90 mol% or more, even more preferably 95 mol% or more, and yet even more preferably 99 mol% or more of the diamine-derived structural unit is derived from a xylylenediamine (preferably meta-xylylenediamine). The upper limit may be 100 mol%. The xylylenediamine is preferably meta-xylylenediamine and para-xylylenediamine, and is more preferably meta-xylylenediamine.

In the present embodiment, a molar ratio of meta-xylylenediamine to para-xylylenediamine in the xylylenediamine is preferably from 10 to 100/from 90 to 0, more preferably from 30 to 100/from 70 to 0, even more preferably from 50 to 100/from 50 to 0, yet even more preferably from 80 to 100/from 20 to 0, still more preferably from 90 to 100/from 10 to 0, yet still more preferably from 95 to 100/from 5 to 0, and particularly still more preferably from 98 to 100/from 2 to 0, when the total of meta-xylylenediamine and para-xylylenediamine is 100 mol. When the ratio of meta-xylylenediamine is increased, an increase in melting point can be suppressed. When the temperature during processing is decreased, the occurrence of burn marks or gelation caused by the xylylenediamine-based polyamide resin can be more effectively suppressed.

Examples of the diamine besides xylylenediamine that can be used as a raw material diamine component of the polyamide resin in the present embodiment include aliphatic diamines such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethyl-hexamethylenediamine, and 2,4,4-trimethylhexamethylenediamine; alicyclic diamines such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, and bis(aminomethyl)tricyclodecane; and diamines having an aromatic ring, such as bis(4-aminophenyl) ether, p-phenylenediamine, and bis(aminomethyl)naphthalene. One type thereof can be used, or two or more types thereof can be mixed and used.

In the xylylenediamine-based polyamide resin used in the present embodiment, from 65.0 to 95.0 mol% of the dicarboxylic acid-derived structural unit is derived from an $\alpha,\omega$-linear aliphatic dicarboxylic acid having from 4 to 8 carbons, and from 35.0 to 5.0 mol% of the dicarboxylic acid-derived structural unit is derived from an $\alpha,\omega$-linear aliphatic dicarboxylic acid having from 9 to 12 carbons. The use of the $\alpha,\omega$-linear aliphatic dicarboxylic acid having from 4 to 8 carbons can increase the amide bond density, which tends to result in a polyamide resin having an excellent oxygen barrier property. In addition, when the $\alpha,\omega$-linear aliphatic dicarboxylic acid having from 9 to 12 carbons is used, the transparency tends to improve as compared with the case where only the $\alpha,\omega$-linear aliphatic dicarboxylic acid having from 4 to 8 carbons is used as the dicarboxylic acid component.

More specifically, the proportion of the $\alpha,\omega$-linear aliphatic dicarboxylic acid having from 4 to 8 carbons (preferably adipic acid) in the dicarboxylic acid-derived structural unit is 65.0 mol% or higher, preferably 71.0 mol%, more preferably 75.0 mol% or higher, and even more preferably 78.0 mol% or higher. Moreover, the proportion of the $\alpha,\omega$-linear aliphatic dicarboxylic acid having from 4 to 8 carbons (preferably adipic acid) in the dicarboxylic acid-derived structural unit is 95.0 mol% or less, preferably 90.0 mol% or less, more preferably 88.0 mol% or less, and even more preferably 85.0 mol% or less.

Further, the proportion of the $\alpha,\omega$-linear aliphatic dicarboxylic acid having from 9 to 12 carbons (preferably sebacic acid) in the dicarboxylic acid-derived structural unit is 5.0 mol% or higher, preferably 10.0 mol% or higher, more preferably 12.0 mol% or higher, and even more preferably 15.0 mol% or higher. Moreover, the proportion of the $\alpha,\omega$-linear aliphatic dicarboxylic acid having from 9 to 12 carbons (preferably sebacic acid) in the dicarboxylic acid-derived structural unit is 35.0 mol% or less, preferably 29.0 mol% or less, more preferably 25.0 mol% or less, and even more preferably 22.0 mol% or less.

In the xylylenediamine-based polyamide resin in the present embodiment, 70 mol% or higher, preferably 75 mol% or higher, more preferably 80 mol% or higher, even more preferably 90 mol% or higher, still preferably 95 mol% or higher, still more preferably 98 mol% or higher, and further more preferably 99.9 mol% or higher of the dicarboxylic acid-derived structural unit is accounted for by the structural unit derived from an $\alpha,\omega$-linear aliphatic dicarboxylic acid having from 4 to 8 carbons and structural unit derived from an $\alpha,\omega$-linear aliphatic dicarboxylic acid having from 9 to 12 carbons. The upper limit of the total may be 100 mol%.

The $\alpha,\omega$-linear aliphatic dicarboxylic acid having from 4 to 8 carbons is, for example, succinic acid, glutaric acid, pimelic acid, adipic acid, or suberic acid, and is preferably adipic acid.

The $\alpha,\omega$-linear aliphatic dicarboxylic acid having from 9 to 12 carbons is, for example, azelaic acid, sebacic acid, undecanedioic acid, and dodecanedioic acid, and is preferably sebacic acid. The sebacic acid can be derived from a plant source and can enhance the bio-base degree of the resin.

In the present embodiment, the $\alpha,\omega$-linear aliphatic dicarboxylic acid having from 4 to 8 carbons preferably contains adipic acid, and the $\alpha,\omega$-linear aliphatic dicarboxylic acid having from 9 to 12 carbons preferably contains sebacic acid. Furthermore, adipic acid preferably accounts for 90 mol% or higher, more preferably 95 mol% or higher, even more preferably 99% or higher of the $\alpha,\omega$-linear aliphatic dicarboxylic acid having from 4 to 8 carbons, and sebacic acid preferably accounts for 90 mol% or higher, more preferably 95 mol% or higher, even more preferably 99% or higher of the $\alpha,\omega$-linear aliphatic dicarboxylic acid having from 9 to 12 carbons.

In the xylylenediamine-based polyamide resin, one type or two or more types of each of the structural unit derived from the $\alpha,\omega$-linear aliphatic dicarboxylic acid having from 4 to 8 carbons and the structural unit derived from the $\alpha,\omega$-linear aliphatic dicarboxylic acid having from 9 to 12 carbons may be used. When two or more types are contained, the total amount thereof preferably falls within the above range.

Examples of dicarboxylic acid components other than the $\alpha,\omega$-linear aliphatic dicarboxylic acid having from 4 to 12 carbons include phthalic acid compounds, such as isophthalic acid, terephthalic acid, and ortho-phthalic acid; and naphthalenedicarboxylic acid, such as 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, and 2,7-naphthalenedicarboxylic acid. One type can be used, or two or more types can be mixed and used.

A particularly preferred embodiment of the xylylenediamine-based polyamide resin in the present embodiments is a polyamide resin containing a diamine-derived structural unit and a dicarboxylic acid-derived structural unit, 95 mol% or higher (more preferably 98 mol% or higher, even more preferably 99.9 mol% or higher) of the diamine-derived structural unit being derived from meta-xylylenediamine, from 75.0 to 95.0 mol% of the dicarboxylic acid-derived structural unit being derived from adipic acid, from 25.0 to 5.0 mol% of the dicarboxylic acid-derived structural unit being derived from sebacic acid, and the total of the structural unit derived from adipic acid and the structural unit derived from sebacic acid accounting for 95 mol% or higher (more preferably 98 mol% or higher, still more preferably 99.9 mol% or higher) of the dicarboxylic acid-derived structural unit.

Note that, the xylylenediamine-based polyamide resin used in the present embodiment contains a dicarboxylic acid-derived structural unit and a diamine-derived structural unit, but may also contain a structural unit in addition to a dicarboxylic acid-derived structural unit and a diamine-derived structural unit, or other moieties such as end groups. Examples of the additional structural unit include, but are not limited to, structural units derived from, for example, a lactam such as $\varepsilon$-caprolactam, valerolactam, laurolactam, and undecalactam, or from an aminocarboxylic acid such as 11-aminoundecanoic acid and 12-aminododecanoic acid. Furthermore, the xylylenediamine-based polyamide resin used in the present embodiment may contain trace amounts of other components such as an additive used in synthesis.

In the xylylenediamine-based polyamide resin in the present embodiment, preferably 70 mass% or more, more preferably 80 mass% or more, even more preferably 90 mass% or more, still preferably 95 mass% or more, still more preferably 98 mass% or more, and further preferably 99 mass% or more of all structural units excluding the end groups are composed of a dicarboxylic acid-derived structural unit and a diamine-derived structural unit. The upper limit may be 100 mass%.

The relative viscosity of the xylylenediamine-based polyamide resin used in the present embodiment is 1.7 or more, preferably 1.9 or more, and more preferably 2.0 or more. Further, the relative viscosity of the xylylenediamine-based polyamide resin is 2.5 or less, preferably 2.4 or less, more preferably 2.3 or less, and may be 2.2 or less.

The relative viscosity of the xylylenediamine-based polyamide resin used in the present embodiment is the ratio of the falling time (t) measured at 25°C by a Cannon-Fenske viscosimeter after dissolving 0.2 g of the xylylenediamine-based polyamide resin in 20 mL of 96% sulfuric acid to the falling time (t0) of 96% sulfuric acid itself measured in the same manner, and is represented by the following equation.

$$\text{Relative viscosity} = t/t0$$

In the case where the polyamide resin layer in the present embodiment includes two or more types of xylylenediamine-based polyamide resins, the relative viscosity of the mixture is used.

The xylylenediamine-based polyamide resin used in the present embodiment preferably has a melting point of 195°C or higher, more preferably 200°C or higher, even more preferably 205°C or higher, and still preferably 210°C or higher, as measured in accordance with differential scanning calorimetry. The xylylenediamine-based polyamide resin preferably has a melting point of 235°C or lower, more preferably 230°C or lower, even more preferably 225°C or lower, and still preferably 220°C or lower.

When the resin composition in the present embodiment contains two or more types of xylylenediamine-based polyamide resins, the melting point of the xylylenediamine-based polyamide resin is a value obtained by multiplying the melting point of each of the xylylenediamine-based polyamide resins by the mass fraction.

The mass ratio of the xylylenediamine-based polyamide resin in the resin composition of the present embodiment is preferably 1 mass% or more, more preferably 2 mass% or more, even more preferably 3 mass% or more, and further preferably 4 mass% or more. When the mass ratio is equal to or more than the lower limit, a higher gas barrier property can be obtained. Further, the mass ratio of the xylylenediamine-based polyamide resin in the resin composition is preferably 50 mass% or less, more preferably less than 50 mass%, even more preferably 40 mass% or less, still preferably 35 mass% or less, still more preferably 25 mass% or less, and further preferably 15 mass% or less. When the mass ratio is equal to or lower than the upper limit, high transparency can be maintained.

The resin composition of the present embodiment may contain only one type of xylylenediamine-based polyamide resin, or may contain two or more types thereof. When two or more types are contained, the total amount thereof preferably falls within the above range.

Blending Ratio of Polyethylene Terephthalate Resin and Xylylenediamine-Based Polyamide Resin

Next, the blending ratio of the polyethylene terephthalate resin and the xylylenediamine-based polyamide resin in the resin composition of the present embodiment will be described. In the present embodiment, from 50 to 1 part by mass of the xylylenediamine-based polyamide resin is contained per from 50 to 99 parts by mass of the polyethylene terephthalate resin. When the total amount of the polyethylene terephthalate resin and the xylylenediamine-based polyamide resin is 100 parts by mass, the mass ratio of the xylylenediamine-based polyamide resin is preferably 1 part by mass or more, more preferably 2 parts by mass or more, even more preferably 3 parts by mass or more, and still more preferably 4 parts by mass or more. Further, the mass ratio of the xylylenediamine-based polyamide resin in the resin composition is preferably 50 mass parts by mass or less, more preferably less than 50 parts by mass, even more preferably 40 parts by mass or less, still preferably 35 parts by mass or less, still more preferably 25 parts by mass or less, further preferably 20 parts by mass or less, and further more preferably 15 parts by mass or less.

The total amount of the polyethylene terephthalate resin and the xylylenediamine-based polyamide resin in the resin composition of the present embodiment is preferably 70 mass% or more, more preferably 75 mass% or more, even more preferably 80 mass% or more, still preferably 85 mass% or more, still more preferably 90 mass% or more, even still more preferably 95 mass% or more, and may be 97 mass% or more. The upper limit of the total amount of the polyethylene terephthalate resin and the xylylenediamine-based polyamide resin in the resin composition of the present embodiment may be 100 mass%.

Other Components

The resin composition of the present embodiment may contain polyamide resins in addition to the xylylenediamine-based polyamide resin, thermoplastic resins in addition to the polyamide resin and the polyethylene terephthalate resin, fillers, and resin additive components.

The polyamide resin in addition to the xylylenediamine-based polyamide resin may be an aliphatic polyamide resin or a semi-aromatic polyamide resin, or may be a mixture of an aliphatic polyamide resin and a semi-aromatic polyamide resin, and preferably includes at least a semi-aromatic polyamide resin. For example, for the polyamide resin, reference can be made to the disclosures in paragraphs [0011] to [0013] of JP 2011-132550 A, the contents of which are incorporated herein.

Examples of the aliphatic polyamide resin include polyamide 6 and polyamide 66, and polyamide 66 is preferable.

Examples of the semi-aromatic polyamide resin include terephthalic acid-based polyamide resins (polyamide 6T, polyamide 9T, polyamide 10T), terephthalic acid- and isophthalic acid-based polyamide resins (polyamide 6T/6I, polyamide 9T/9I, polyamide 10T/10I).

The resin composition may contain only one type of polyamide resin or may contain two or more types of polyamide resins in addition to the xylylenediamine-based polyamide resin. The polyamide resin in addition to the xylylenediamine-based polyamide resin is preferably blended at a ratio of 10 parts by mass or less with respect to 100 parts by mass of the xylylenediamine-based polyamide resin.

For details on the filler, refer to the description in paragraphs [0029] to [0035] of JP 2020-200380 A, the contents thereof are incorporated into the specification. When the filler is blended, the content thereof is preferably from 10 to 50 mass% of the resin composition.

Examples of resin additives include oxidation accelerators, yellowing inhibitors, oxygen absorbers, heat stabilizers, light stabilizers, moisture-proof agents, water-proof agents, lubricants (calcium stearate or the like), and spreading agents. Reference can be made to the descriptions in paragraph [0061] to [0070] of WO 2021/177126, the contents of which are incorporated herein.

Method for Producing Resin Composition

The resin composition of the present embodiment can be produced by a known method for producing a thermoplastic resin composition.

As an embodiment of the method for producing the resin composition of the present embodiment, it is preferable to blend and melt-knead the polyethylene terephthalate resin, the polyamide resin, and other components as necessary. An example of such a resin composition is pellets.

A specific example thereof include a method in which all components are preliminarily mixed using various mixers such as a tumbler and a Henschel mixer, and then melt-kneaded using a mixer such as a Banbury mixer, a roll mixer, a Brabender mixer, a single-screw kneading extruder, a twin-screw kneading extruder, or a kneader. In order to prevent reinforcing fillers from being crushed during kneading, it is preferable to feed reinforcing fillers midway from the extruder. Further, two or more components selected from all components may be mixed and kneaded in advance.

Physical Properties of Resin Composition

Next, the physical properties of the resin composition of the present embodiment will be described.

The resin composition of the present embodiment has excellent transparency.

Specifically, when the resin composition of the present embodiment is molded into an unstretched film having a thickness of 180 $\mu$m, the haze is preferably 35.0% or less, and more preferably 10.0% or less. The lower limit is ideally 0%, but is practically 0.1% or more. The excellent transparency of such an unstretched film is achieved by using an $\alpha,\omega$-linear aliphatic dicarboxylic acid having from 4 to 8 carbons and an $\alpha,\omega$-linear aliphatic dicarboxylic acid having from 9 to 12 carbons together as dicarboxylic acid components constituting the polyamide resin.

When the resin composition of the present embodiment is molded into a stretched film having a thickness of 20 $\mu$m, the haze is preferably 35.0% or less, more preferably 25.0% or less, and even more preferably 20.0% or less. The lower limit is ideally 0%, but is practically 0.1% or more. The excellent transparency of such an unstretched film can be achieved by adjusting the relative viscosity of the xylylenediamine-based polyamide resin.

The resin composition of the present embodiment has an excellent oxygen barrier property.

Specifically, when the resin composition of the present embodiment is molded into an unstretched film having a thickness of 180 $\mu$m, the oxygen barrier property is preferably 5.0 (cc·mm)/(m$^2$·day·atm) or less. Further, the lower limit of the oxygen barrier property is preferably 0 (cc·mm)/(m$^2$·day·atm), but is practically 0.01 (cc·mm)/(m$^2$·day·atm) or more. The excellent oxygen barrier property of such an unstretched film is achieved by using the xylylenediamine-based polyamide resin, particularly the polyamide resin containing a structural unit derived from an $\alpha,\omega$-linear aliphatic dicarboxylic acid having from 4 to 8 carbons as a dicarboxylic acid unit.

When the resin composition of the present embodiment is molded into a stretched film having a thickness of 20 $\mu$m, the oxygen barrier property is preferably 2.0 (cc·mm)/(m$^2$·day·atm) or less, and more preferably 1.5 (cc·mm)/(m$^2$·day·atm) or less. Further, the lower limit of the oxygen barrier property is preferably 0 (cc·mm)/(m$^2$·day - atm), but is practically 0.01 (cc·mm)/(m$^2$·day·atm) or more. The excellent oxygen barrier property of such a stretched film is achieved by stretching. The stretched film is, for example, a stretched film produced under the conditions described in Examples.

Applications of and Molding Methods for Resin Composition

Next, applications of the resin composition of the present embodiment will be described.

The molded body of the present embodiment is formed from the resin composition of the present embodiment. The method for producing the molded body of the present embodiment is not limited.

For example, the molded body of the present embodiment may be directly molded by various molding methods after all components are melt-kneaded, or may be molded by various molding methods after all components are melt-kneaded and pelletized, and then melted again.

The method for molding the molded body is not limited, and commonly known molding methods can be used. Examples of the molding method include injection molding, injection compression molding, extrusion molding, profile extrusion molding, transfer molding, hollow molding, gas-assisted hollow molding, blow molding, extrusion blow molding, IMC (in-mold coating) molding, rotational molding, multilayer molding, two-color molding, insert molding, sandwich molding, foam molding, and pressure molding.

An embodiment of the molded body of the present embodiment is an extrusion-molded body. Another embodiment of the molded body of the present embodiment is an injection-molded body.

The shape of the molded body of the present embodiment is not limited and may be appropriately selected depending on the application and purpose of the molded body. Examples thereof include a sheet shape, a film shape, a cylindrical shape, an annular shape, a circular shape, an elliptical shape, a flat shape, a plate shape, a rod shape, a gear shape, a polygonal shape, a hollow shape, a frame shape, a box shape, and a panel shape, of which a hollow shape is preferable.

The molded body of the present embodiment is preferably a film. The film is preferably a stretched film. The stretched film may be a single-layer stretched film or a multilayer stretched film. The film is usually an extrusion-molded product formed by extrusion molding. After being extruded by extrusion molding, the stretched film is preferably stretched while being conveyed between rolls.

Stretching may be performed in only one direction (uniaxial stretching) or in two directions perpendicular to each other (biaxial stretching), of which biaxial stretching is preferred. The film is preferably stretched in either the machine direction (sometimes referred to as "MD") or the transverse direction (sometimes referred to as "TD") of the film (more preferably MD), or preferably stretched in both MD and TD. In the case of biaxial stretching, stretching in the two directions may be carried out simultaneously or sequentially.

When the film is uniaxially stretched, the stretching ratio (MD or TD stretching ratio) is preferably 2 times or more, more preferably 3 times or more, and even more preferably 5 times or more.

When the film is biaxially stretched, the stretching ratio is preferably 2 times or more, more preferably 2.5 times or more, and even more preferably 2.9 times or more in each direction. In the case of uniaxial or biaxial stretching, the upper limit of each stretching ratio is not limited, but may be, for example, 5 times or less, further 4 times or less, and particularly 3.5 times or less.

The total stretching ratio of the film is preferably 4 times or more, more preferably 6 times or more, and even more preferably 8 times or more. The upper limit of the total stretching ratio is not limited, but may be, for example, 25 times or less, further 16 times or less, and particularly 13 times or less. Here, the total stretching ratio is a ratio of the area of the film after stretching to the area of the film before stretching, and is a value represented by the following equation.

$$\text{Total Stretching Ratio} = \text{MD Stretching Ratio} \times \text{TD Stretching Ratio}$$

The molded body of the present embodiment is also preferably a multilayer body laminated with another layer. Examples of another layer included in the multilayer body include a polyolefin film (particularly, a stretched polyolefin film), a polyester film (particularly, a polyethylene terephthalate film), and a metal vapor-deposited film. Examples of another layer included in the multilayer body also include a barrier resin layer, an oxygen-absorbing layer, a sealant layer, and a design layer.

The single-layer or multilayer film of the present embodiment may be subjected to a heat treatment or a moisture conditioning treatment depending on the application. For details thereof, refer to the descriptions in paragraph [0049] of WO 2021/070500, the contents of which are incorporated herein by reference.

In addition, as for producing the stretched film and producing the multilayer film, refer to the descriptions in paragraphs [0025] to [0030] of WO 2019/208687 and the description in JP 2001-002800 A without departing from the spirit of the present invention, the contents of which are incorporated herein by reference.

The molded body of the present embodiment is also preferably a hollow molded body. An example of the hollow molded body is a bottle. The hollow molded body is, for example, an injection-molded body molded by injection molding.

Examples of the hollow molded body include a single-layer container and a multilayer container, of which a single-layer container is preferable. In the case of a multilayer container, examples thereof include a multilayer container having a layer formed from the resin composition of the present embodiment and another resin layer. For example, a multilayer container having a three-layer structure of polyethylene terephthalate resin layer/layer formed from the resin composition of the present embodiment/polyethylene terephthalate resin layer. The type of the container is not limited, and examples thereof include a bottle, a cup, a tube, a tray, and a storage container, of which a bottle is preferable.

The single-layer or multilayer container can be formed by, for example, forming a preform using injection molding and then moving on to blow molding.

The application field of the molded body of the present embodiment is not limited.

When the molded body of the present embodiment is a single-layer or multilayer film, or a single-layer or multilayer container, the molded body is preferably used as a packaging material. Examples of the packaging material of the present embodiment include packaging materials for food, medical purposes, and cosmetics.

Examples of contents that can be filled or packaged in the packaging material of the present embodiment include snacks such as rice crackers, bean snacks, nuts, biscuits, cookies, wafers, marshmallows, pies, half-baked cakes, candies, and snack foods; staples such as bread, snack noodles, instant noodles, dry noodles, pasta, sterilized packaged cooked rice, rice soup, rice porridge, packaged mochi, and cereals; processed produce such as pickles, boiled beans, natto fermented beans, miso, Koya dried tofu, frozen tofu, tofu, marinated and boiled mushrooms, konjac, processed wild vegetables, jams, peanut butter, salads, frozen vegetables, and processed potato products; processed farm animal products such as hams, bacon, sausages, processed chicken products, and corned beef; processed seafood products such as fish ham, fish sausage, fish ground products, kamaboko fish cakes, seaweed, marinated and boiled seafood, bonito flakes, salted and fermented marine animal viscera, smoked salmon, and salted and fermented fish eggs; fruits such as peaches, mandarin oranges, pineapples, mangoes, apples, pears, and cherries; vegetables such as corn, asparagus, mushrooms, onions, carrots, radishes, and potatoes; frozen side dishes such as meat patties, meatballs, fried seafood, gyoza dumplings, and croquettes; prepared foods such as chilled side dishes; dairy products such as butter, margarine, cheese, cream, instant creamy powder, and infant formula; foods such as liquid seasonings, retort packaged curry, and pet food; cigarettes, single-use heat pads, medicines, and cosmetics.

Examples

The present invention will next be described in more detail with reference to Examples. Materials, amounts used, proportions, processing details, and processing procedures described in the following Examples can be appropriately changed without departing from the spirit of the present invention. Thus, the scope of the present invention is not limited to the specific examples described below.

When a measuring device used in the Examples is not readily available due to, for example, discontinuation, another device with equivalent performance can be used for measurement.

Note that, AA represents adipic acid, SA represents sebacic acid, and RV represents relative viscosity.

1. Raw Material

PET 1: BK2180, available from Mitsubishi Chemical Corporation, isophthalic acid copolymerized polyethylene terephthalate (intrinsic viscosity: 0.83 dL/g, melting point: 248°C)
PET 2: RT-553C, available from Mitsubishi Chemical Corporation, polyethylene terephthalate (intrinsic viscosity: 0.84 dL/g, melting point: 255°C)

MXD610 (AA:SA = 80:20): Synthesized according to the following synthesis example.

Synthesis Example of MXD610

In a reaction container provided with a stirrer, a partial condenser, a total condenser, a thermometer, a dropping funnel, a nitrogen gas introduction tube, and a strand die, 10000 g (68 mol) of precisely weighed adipic acid, 3460 g (17.1 mol) of sebacic acid, 0.38 g of sodium hypophosphite monohydrate ($NaH_2PO_2 \cdot H_2O$) (5 ppm by mass in terms of the phosphorus atom concentration in the polyamide resin), and 0.15 g of sodium acetate were blended, and the reaction container was sufficiently purged with nitrogen. After that, the reaction container was filled with nitrogen to an internal pressure of 0.4 MPa, and the inside of the system was heated to 190°C while stirring under a small nitrogen gas flow.

11813 g (87 mol) of meta-xylylenediamine was added dropwise to the reaction container under stirring, and the temperature inside the system was continuously increased while the condensed water produced was being removed from the system. After dropwise addition of the meta-xylylenediamine was completed, the internal temperature was increased. When the temperature reached 255°C, the pressure inside the reaction container was reduced. The internal temperature was then further increased, and a melt polycondensation reaction was continued for 10 minutes at 260°C. Subsequently, the inside of the system was pressurized with nitrogen, and the obtained polymer was removed from the strand die and pelletized, resulting in polyamide MXD610 (80/20). The resulting resin had an RV of 2.1 and a melting point of 212°C.

MXD610 (AA:SA = 80:20): Synthesized according to the following synthesis example.

Synthesis Example of MXD610

In a reaction container provided with a stirrer, a partial condenser, a total condenser, a thermometer, a dropping funnel, a nitrogen gas introduction tube, and a strand die, 10000 g (68 mol) of precisely weighed adipic acid, 3460 g (17.1 mol) of sebacic acid, 0.38 g of sodium hypophosphite monohydrate ($NaH_2PO_2 \cdot H_2O$) (5 ppm by mass in terms of the phosphorus atom concentration in the polyamide resin), and 0.15 g of sodium acetate were blended, and the reaction container was sufficiently purged with nitrogen. After that, the reaction container was filled with nitrogen to an internal pressure of 0.4 MPa, and the inside of the system was heated to 190°C while stirring under a small nitrogen gas flow.

11813 g (87 mol) of meta-xylylenediamine was added dropwise to the reaction container under stirring, and the temperature inside the system was continuously increased while the condensed water produced was being removed from the system. After dropwise addition of the meta-xylylenediamine was completed, the internal temperature was increased. When the temperature reached 255°C, the pressure inside the reaction container was reduced. The internal temperature was then further increased, and a melt polycondensation reaction was continued for 10 minutes at 260°C. Subsequently, the inside of the system was pressurized with nitrogen, and the obtained polymer was removed from the strand die and pelletized, resulting in polyamide MXD610 (80/20). The obtained resin was dried in a batch dryer at 180°C for 2 hours to increase the degree of polymerization, resulting in a resin having an RV of 2.7 and a melting point of 212°C.

MXD610 (AA:SA = 90:10): Synthesized according to the following synthesis example.

Synthesis Example of MXD610 (90/10)

In a reaction container with a stirrer, a partial condenser, a total condenser, a thermometer, a dropping funnel, a nitrogen gas introduction tube, and a strand die, weighed raw materials including 10000 g (68 mol) of adipic acid, 1538 g (7.6 mol) of sebacic acid, 0.33 g of sodium hypophosphite monohydrate ($NaH_2PO_2 \cdot H_2O$) (5 ppm by mass in terms of the phosphorus atom concentration in the polyamide resin), and 0.13 g of sodium acetate were blended, and then sufficiently purged with nitrogen, after which the reaction container was filled with nitrogen to an internal pressure of 0.4 MPa, and the inside of the system was heated to 190°C while stirring under a small nitrogen gas flow.

10500 g (77 mol) of meta-xylylenediamine was added dropwise to the reaction container under stirring, and the temperature inside the system was continuously increased while the condensed water produced was being removed from the system. After dropwise addition of the meta-xylylenediamine was completed, the internal temperature was increased. When the temperature reached 255°C, the pressure inside the reaction container was reduced. The internal temperature was then further increased, and a melt polycondensation reaction was continued for 10 minutes at 260°C. Subsequently, the inside of the system was pressurized with nitrogen, and the obtained polymer was removed from the strand die and pelletized, resulting in polyamide MXD610 (90/10). The resulting resin had an RV of 2.1 and a melting point of 225°C.

MXD610 (AA:SA = 70:30): Synthesized according to the following synthesis example.

Synthesis Example of MXD610 (70/30)

In a reaction container provided with a stirrer, a partial condenser, a total condenser, a thermometer, a dropping funnel, a nitrogen gas introduction tube, and a strand die, 10000 g (68 mol) of precisely weighed adipic acid, 5931 g (29.3 mol) of sebacic acid, 0.44 g of sodium hypophosphite monohydrate ($NaH_2PO_2 \cdot H_2O$) (5 ppm by mass in terms of the phosphorus atom concentration in the polyamide resin), and 0.17 g of sodium acetate were blended, and the reaction container was sufficiently purged with nitrogen. After that, the reaction container was filled with nitrogen to an internal pressure of 0.4 MPa, and the inside of the system was heated to 190°C while stirring under a small nitrogen gas flow.

13500 g (99 mol) of meta-xylylenediamine was added dropwise to the reaction container under stirring, and the temperature inside the system was continuously increased while the condensed water produced was being removed from the system. After dropwise addition of the meta-xylylenediamine was completed, the internal temperature was increased. When the temperature reached 255°C, the pressure inside the reaction container was reduced. The internal temperature was then further increased, and a melt polycondensation reaction was continued for 10 minutes at 260°C. Subsequently, the inside of the system was pressurized with nitrogen, and the obtained polymer was removed from the strand die and pelletized, resulting in polyamide MXD610 (70/30). The resulting resin had an RV of 2.1 and a melting point of 210°C.

MXD10: Synthesized according to the following synthesis example.

Synthesis Example of MXD10

Sebacic acid (available from CASDA) was placed in a jacketed reactor provided with an agitator, a partial condenser, a cooler, a thermometer, a dropping tank, and a nitrogen gas introduction tube. The reactor was sufficiently purged with nitrogen, and the sebacic acid was heated and melted at 170°C. Then, while the contents were being agitated and while m-xylylenediamine (MXDA, available from Mitsubishi Gas Chemical Company, Inc.) was gradually added dropwise to give a molar ratio of the m-xylylenediamine to the sebacic acid of 1:1, the temperature was increased to 240°C. After the completion of dropwise addition, the temperature was increased to 260°C, and the reaction was continued for 20 minutes. Thereafter, the internal pressure of the reaction system was continuously reduced to 0.08 MPa, and then the reaction was continued. After completion of the reaction, a pressure of 0.2 MPa was applied in the reactor via nitrogen gas, and the polymer was taken out as a strand from a nozzle at a lower part of the polymerization tank and cooled with water. The strand was then pelletized with a pelletizer. The resulting resin had an RV of 2.1 and a melting point of 190°C.

MXD6: Available from Mitsubishi Gas Chemical Company, Inc., product number: S6001, RV 2.1, melting point 237°C

Examples 1 to 6 and Comparative Examples 1 to 6

Production of Unstretched Film and Stretched Film

The polyester resins and polyamide resins presented in Table 1 or 2 were supplied to a single-screw extruder equipped with a T-die (available from Research Laboratory of Plastics Technology Co., Ltd., screw diameter: 30 mm) in the proportions (unit: parts by mass) presented in Table 1 or 2, melt-kneaded at 270°C, and extruded from the die into unstretched films having a thickness of 180 $\mu$m and a width of 130 mm.

Further, the resulting unstretched films were cut into squares having a length of 90 mm. Thereafter, stretching was performed separately in both MD and TD at a stretching ratio of 3 × 3 using a biaxial stretching apparatus (the tenter method, EX105S, available from Toyo Seiki Seisaku-sho, Ltd.), resulting in stretched films having a thickness of 20 $\mu$m. In this stretching process, a relaxation operation was provided midway, through which an MD relaxation rate of 5.0% and a TD relaxation rate of 5.0% were achieved. Further, heat setting was performed after stretching. The heat setting temperature was 170°C and the heat setting duration was 30 seconds, resulting in single-layer stretched films.

Various properties of the resulting unstretched films and stretched films were evaluated as follows. The results are presented in Table 1 or 2 below.

Haze

The haze values of the resulting unstretched films and stretched films were measured using a haze meter.

The haze meter used was "COH-300A" available from Nippon Denshoku Industries Co., Ltd.

Oxygen Barrier Property

The resulting unstretched films and stretched films were subjected to a measurement of oxygen transmission rate (OTR, unit: cc·mm/m$^2$·atm·day) by the isobaric method in an atmosphere of 23 °C and a relative humidity (RH) of 60%. The pressure of the oxygen atmosphere was 1 atm, and the measurement duration was 24 hours (1 day).

The oxygen transmission rate (OTR) was measured using an oxygen transmission rate measuring device (available from MOCON, "OX-TRAN (trade name) 2/21").

[Table 1]

| | | Example 1 | Comparative Example 1 | Example 2 | Comparative Example 2 | Example 3 | Comparative Example 3 | Comparative Example 4 |
|---|---|---|---|---|---|---|---|---|
| Polyester Resin | PET 1 (BK2180) | 95 | 95 | 90 | 90 | 70 | 70 | 90 |
| | PET 2 (RT-553C) | | | | | | | |
| Polyamide resin | MXD610 (AA:SA = 80:20) RV 2.1 | 5 | | 10 | | 30 | | |
| | MXD610 (AA:SA = 80:20) RV 2.7 | | | | | | | |
| | MXD610 (AA:SA = 90:10) RV 2.1 | | | | | | | |
| | MXD610 (AA:SA = 70:30) RV 2.1 | | | | | | | |
| | MXD10 RV (2.1) | | 5 | | 10 | | 30 | 2 |
| | MXD6 RV (2.1) | | | | | | | 8 |
| Unstretched Film | Haze (%/180 μm thickness) | 3.7 | 28.8 | 6.1 | 42.2 | 33.5 | 58.2 | 11.0 |
| | Oxygen Barrier Property ((cc·mm)/(m²·day·atm)) | 3.1 | 3.3 | 2.6 | 2.9 | 1.7 | 2.7 | 2.8 |
| Stretched Film 3 × 3 Times | Haze (%/20 μm thickness) | 18.1 | 78.4 | 18.1 | 84.0 | 23.0 | 65.1 | 39.3 |
| | Oxygen Barrier Property ((cc-mm)/(m²·day·atm)) | 1.4 | 1.9 | 1.1 | 1.7 | 0.6 | 1.4 | 0.9 |

EP 4 491 669 A1

[Table 2]

| | | Example 2 | Example 4 | Example 5 | Example 6 | Comparative Example 2 | Comparative Example 5 | Comparative Example 6 |
|---|---|---|---|---|---|---|---|---|
| Polyester Resin | PET 1 (BK2180) | 90 | | 90 | 90 | 90 | 90 | 90 |
| | PET 2 (RT-553C) | | 90 | | | | | |
| Polyamide resin | MXD610 (AA:SA = 80:20) RV 2.1 | 10 | 10 | | | | | |
| | MXD610 (AA:SA = 80:20) RV 2.7 | | | | | | 10 | |
| | MXD610 (AA:SA = 90:10) RV 2.1 | | | 10 | | | | |
| | MXD610 (AA:SA = 70:30) RV 2.1 | | | | 10 | | | |
| | MXD10 RV (2.1) | | | | | 10 | | |
| | MXD6 RV (2.1) | | | | | | | 10 |
| Unstretched Film | Haze (%/180 μm thickness) | 6.1 | 6.7 | 8.3 | 5.5 | 42.2 | 8.5 | 10.4 |
| | Oxygen Barrier Property ((cc·mm)/(m²·day·atm)) | 2.6 | 2.6 | 2.4 | 2.6 | 2.9 | 2.5 | 2.7 |
| Stretched Film 3 × 3 Times | Haze (%/20 μm thickness) | 18.1 | 18.5 | 17.0 | 15.6 | 84.0 | 22.5 | 28.1 |
| | Oxygen Barrier Property ((cc·mm)/(m²·day·atm)) | 1.1 | 1.1 | 0.9 | 1.4 | 1.7 | 1.1 | 0.7 |

In Tables 1 and 2, "MXD610 (AA:SA = 80:20)" means MXD6 having a molar ratio of adipic acid to sebacic acid of 80:20. The same interpretation can be applied to other polyamide

The above results clearly indicate that the resin composition of the present embodiment had excellent transparency and an oxygen barrier property. In particular, given that blends of polyester resin and polyamide resin tend to have inferior transparency, it is remarkable that the use of a specific xylylenediamine-based polyamide resin in the present invention resulted in significantly reduced haze and improved transparency.

**Claims**

1. A resin composition comprising from 50 to 99 parts by mass of a polyethylene terephthalate resin and from 50 to 1 part by mass of a polyamide resin, wherein

   the polyamide resin is a copolymer containing a diamine-derived structural unit and a dicarboxylic acid-derived structural unit, 70 mol% or higher of the diamine-derived structural unit is derived from xylylenediamine, from 65.0 to 95.0 mol% of the dicarboxylic acid-derived structural unit is derived from an $\alpha,\omega$-linear aliphatic dicarboxylic acid having from 4 to 8 carbons, from 35.0 to 5.0 mol% of the dicarboxylic acid-derived structural unit is derived from an $\alpha,\omega$-linear aliphatic dicarboxylic acid having from 9 to 12 carbons; and
   the polyamide resin has a relative viscosity of from 1.7 to 2.5.

2. The resin composition according to claim 1, wherein from 71.0 to 95.0 mol% of the dicarboxylic acid-derived structural unit is derived from an $\alpha,\omega$-linear aliphatic dicarboxylic acid having from 4 to 8 carbons, and from 29.0 to 5.0 mol% of the dicarboxylic acid-derived structural unit is derived from an $\alpha,\omega$-linear aliphatic dicarboxylic acid having from 9 to 12 carbons.

3. The resin composition according to claim 1, wherein from 75.0 to 95.0 mol% of the dicarboxylic acid-derived structural unit is derived from an $\alpha,\omega$-linear aliphatic dicarboxylic acid having from 4 to 8 carbons, and from 25.0 to 5.0 mol% of the dicarboxylic acid-derived structural unit is derived from an $\alpha,\omega$-linear aliphatic dicarboxylic acid having from 9 to 12 carbons.

4. The resin composition according to any one of claims 1 to 3, wherein the $\alpha,\omega$-linear aliphatic dicarboxylic acid having from 4 to 8 carbons contains adipic acid, and the $\alpha,\omega$-linear aliphatic dicarboxylic acid having from 9 to 12 carbons contains sebacic acid.

5. The resin composition according to any one of claims 1 to 4, wherein 70 mol% or higher of the diamine-derived structural unit is derived from meta-xylylenediamine.

6. The resin composition according to any one of claims 1 to 5, wherein the polyamide resin has a relative viscosity of from 1.9 to 2.2.

7. A molded body formed from the resin composition described in any one of claims 1 to 6.

8. The molded body according to claim 7, wherein the molded body is an extrusion-molded body.

9. The molded body according to claim 7 or 8, wherein the molded body is a film.

10. The molded body according to claim 9, wherein the molded body is uniaxially stretched or biaxially stretched.

11. The molded body according to claim 7, wherein the molded body is an injection-molded body.

12. The molded body according to claim 7 or 11, wherein the molded body is a hollow molded body.

13. A multilayer body comprising the molded body described in any one of claims 7 to 12.

## INTERNATIONAL SEARCH REPORT

International application No.

**PCT/JP2022/045484**

### A. CLASSIFICATION OF SUBJECT MATTER

*C08L 67/02*(2006.01)i; *B65D 65/02*(2006.01)i; *C08G 69/26*(2006.01)i; *C08L 77/06*(2006.01)i
FI: C08L67/02; C08L77/06; C08G69/26; B65D65/02 E

According to International Patent Classification (IPC) or to both national classification and IPC

### B. FIELDS SEARCHED

Minimum documentation searched (classification system followed by classification symbols)

C08L1/00-101/14; C08G69/00-69/50

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2017/150109 A1 (MITSUBISHI GAS CHEMICAL CO) 08 September 2017 (2017-09-08)<br>entire text | 1-13 |
| A | JP 2011-37134 A (MITSUBISHI GAS CHEMICAL CO) 24 February 2011 (2011-02-24)<br>entire text | 1-13 |
| A | WO 2015/098862 A1 (MITSUBISHI GAS CHEMICAL CO) 02 July 2015 (2015-07-02)<br>entire text | 1-13 |
| A | JP 2010-241910 A (MITSUBISHI GAS CHEMICAL CO) 28 October 2010 (2010-10-28)<br>entire text | 1-13 |
| A | JP 2011-136552 A (MITSUBISHI GAS CHEMICAL CO) 14 July 2011 (2011-07-14)<br>entire text | 1-13 |
| A | JP 2012-207235 A (EASTMAN CHEMICAL CO) 25 October 2012 (2012-10-25)<br>entire text | 1-13 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **13 February 2023** | **21 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/045484**

| Patent document cited in search report | | | Publication date (day/month/year) | Patent family member(s) | | | Publication date (day/month/year) |
|---|---|---|---|---|---|---|---|
| WO | 2017/150109 | A1 | 08 September 2017 | US entire text | 2020/0247988 | A1 | |
| JP | 2011-37134 | A | 24 February 2011 | (Family: none) | | | |
| WO | 2015/098862 | A1 | 02 July 2015 | US entire text | 2017/0037239 | A1 | |
| | | | | EP | 3088466 | A1 | |
| | | | | CA | 2934776 | A | |
| | | | | AU | 2014371157 | A | |
| | | | | KR | 10-2016-0103004 | A | |
| | | | | CN | 105849189 | A | |
| | | | | MX | 2016008329 | A | |
| | | | | RU | 2016124788 | A | |
| | | | | TW | 201533150 | A | |
| | | | | PE | 7392016 | A | |
| | | | | PE | 20160739 | A | |
| JP | 2010-241910 | A | 28 October 2010 | (Family: none) | | | |
| JP | 2011-136552 | A | 14 July 2011 | (Family: none) | | | |
| JP | 2012-207235 | A | 25 October 2012 | US entire text | 2006/0197246 | A1 | |
| | | | | CN | 101132909 | A | |
| | | | | KR | 10-2008-0021013 | A | |
| | | | | TW | 200804454 | A | |
| | | | | WO | 2006/094133 | A1 | |
| | | | | EP | 1985664 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020250794 A
- WO 2017094542 A
- WO 2016084475 A
- JP 2016169027 A
- JP 2006111718 A
- JP 2017105873 A
- WO 2013168804 A
- JP 2011132550 A
- JP 2020200380 A
- WO 2021177126 A
- WO 2021070500 A
- WO 2019208687 A
- JP 2001002800 A